(19) Europäisches Patentamt / European Patent Office / Office européen des brevets

(11) **EP 3 771 921 B1**

(12) **EUROPEAN PATENT SPECIFICATION**

(45) Date of publication and mention
of the grant of the patent:
**29.09.2021 Bulletin 2021/39**

(51) Int Cl.:
***G01S 7/40*** *(2006.01)*        ***G01S 13/90*** *(2006.01)*

(21) Application number: **20176806.6**

(22) Date of filing: **27.05.2020**

(54) **METHOD FOR PROCESSING NON-INTERRUPTED PHASE SYNCHRONIZATION SIGNAL OF BISTATIC SAR BASED ON CODED SIGNAL**

VERFAHREN ZUR VERARBEITUNG EINES UNUNTERBROCHENEN PHASENSYNCHRONISATIONSSIGNALS VON BISTATISCHEM SAR AUF DER BASIS EINES CODIERTEN SIGNALS

PROCÉDÉ DE TRAITEMENT D'UN SIGNAL DE SYNCHRONISATION DE PHASE NON INTERROMPU D'UN SAR BISTATIQUE SUR LA BASE D'UN SIGNAL CODÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2019 CN 201910690829**

(43) Date of publication of application:
**03.02.2021 Bulletin 2021/05**

(73) Proprietor: **Institute of Electronics, Chinese Academy of Sciences
Beijing 100190 (CN)**

(72) Inventors:
• **WANG, Yu**
  **Beijing 100190 (CN)**
• **LIU, Kaiyu**
  **Beijing 100190 (CN)**
• **LIANG, Da**
  **Beijing 100190 (CN)**
• **ZHANG, Heng**
  **Beijing 100190 (CN)**
• **DENG, Yunkai**
  **Beijing 100190 (CN)**
• **CHEN, Yafeng**
  **Beijing 100190 (CN)**
• **LIU, Dacheng**
  **Beijing 100190 (CN)**

(74) Representative: **Brevalex
95, rue d'Amsterdam
75378 Paris Cedex 8 (FR)**

(56) References cited:
**CN-A- 109 917 388**

• **YUN FENG SHAO ET AL: "Fast Backprojection Algorithm for Bistatic SAR Imaging", IEEE GEOSCIENCE AND REMOTE SENSING LETTERS, IEEE SERVICE CENTER, NEW YORK, NY, US, vol. 10, no. 5, 1 September 2013 (2013-09-01), pages 1080-1084, XP011515177, ISSN: 1545-598X, DOI: 10.1109/LGRS.2012.2230243**

**Description**

TECHNICAL FIELD

The disclosure relates to the technical field of radars, and more particularly, to a method for processing a non-interrupted phase synchronization signal of a bistatic synthetic aperture radar (SAR) based on a coded signal.

BACKGROUND

A SAR is an active microwave imaging radar, which can implement all-time all-weather observation, and has unique advantages in applications to aspects of environmental protection, disaster monitoring, marine observation, resource exploration, and military reconnaissance.

Compared with a monostatic radar, a bistatic radar has the advantages of flexible configuration, multiangle observation, anti-interference, the ability of single-pass interferometry with flexible baseline and so on. These advantages and application prospects have made the bistatic radar more and more popular in recent years. A bistatic SAR system is an important new-type radar system, and the system carries radars on two satellites flying in formation to form a bistatic radar system to complete tasks of high-resolution wide-swath (HRWS) imaging, ground elevation measurement, ocean current velocity measurement, ground moving target monitoring and the like. The bistatic SAR system is implemented in a manner that a primary satellite transmits a signal and the primary and secondary satellites simultaneously receive signals. Since the primary and secondary satellites use different oscillators, on the one hand, an azimuth phase error introduced by a oscillator frequency error may exist, and is accumulated along with time; on the other hand, transmitting and receiving phases are unrelated in noise, a low-frequency phase noise component may not be canceled like monostatic condition, and an echo domain phase error generated by phase asynchrony may influence imaging focusing and interferometric phase accuracy, so that phase synchronization is required. A method for processing a phase synchronization signal plays an important role in the bistatic SAR system.

CN109 917 388 A discloses a bistatic synthetic aperture phase synchronization method calculating a compensation phase based the peak phase difference between a first and a second synchronous signals received respectively on a first and a second SAR.

SUMMARY

In order to solve the problem of phase synchronization in a bistatic SAR system, the disclosure provides a method for processing a non-interrupted phase synchronization signal of a bistatic SAR based on a coded signal. A phase synchronization signal is sent by virtue of a time slot between a moment at which a radar signal is transmitted and a moment at which a radar echo signal is received. The radar echo signal and the phase synchronization signal are received within the initial period of an echo window for receiving the radar echo signal. The phase synchronization of echo signals in a distributed SAR system can be achieved, thereby improving imaging quality.

An embodiment of the disclosure provides a method for processing a non-interrupted phase synchronization signal of a bistatic SAR based on a coded signal. The method may include the following operations.

A first SAR (primary satellite) and a second SAR (secondary satellite) receive an echo signal generated by a radar signal transmitted by the first SAR to obtain a first received echo signal and a second received echo signal respectively.

The second SAR receives a second phase synchronization signal from the first SAR to obtain a second received synchronization signal, and the first SAR receives a first phase synchronization signal from the second SAR to obtain a first received synchronization signal.

If the first SAR receives the echo signal and the first phase synchronization signal transmitted by the second SAR within a present receiving period, the first SAR stores both the first received echo signal and the first received synchronization signal as a first receiving signal, and if the first SAR receives the echo signal but does not receive the first phase synchronization signal from the second SAR within a present receiving period, the first SAR stores only the first received echo signal as a first receiving signal.

If the second SAR receives the echo signal and the second phase synchronization signal transmitted by the first SAR within a present receiving period, the second SAR stores both the second received echo signal and the second received synchronization signal as a second receiving signal, and if the second SAR receives the echo signal but does not receive the second phase synchronization signal from the first SAR within a present receiving period, the second SAR stores only the second received echo signal as a second receiving signal.

The first phase synchronization signal and the second phase synchronization signal are coded signals orthogonal to the radar signal.

Whether the first receiving signal contains the first received synchronization signal is determined according to a timing relationship. In response to determining that the first receiving signal does not the first received synchronization signal, the first receiving signal is determined as a first echo processing signal, and in response to determining that the first receiving signal contains the first received synchronization signal, the first receiving signal is processed as follows: a first filter is constructed based on a first phase transmission signal, matched filtering is performed on the first receiving signal to obtain a first compressed signal, a peak phase $\varphi_1$ is extracted from the first compressed signal, and a pulse peak main lobe of the first compressed signal is zeroed to obtain a first compressed zero signal; a second filter is obtained by taking a reciprocal of the first filter, and the first compressed zero signal is filtered with the second filter to obtain a first echo processing signal.

Whether the second receiving signal contains the second received synchronization signal is determined according to the timing relationship. In response to determining that the second receiving signal does not contain the second received synchronization signal, the second receiving signal is determined as a second echo processing signal, and in response to determining that the second receiving signal contains the second received synchronization signal, the second receiving signal is processed as follows: a third filter is constructed based on a second phase transmission signal, matched filtering is performed on the second receiving signal to obtain a second compressed signal, a peak phase $\varphi_2$ is extracted from the second compressed signal, and a pulse peak main lobe of the second compressed signal is zeroed to obtain a second compressed zero signal; a fourth filter is obtained by taking a reciprocal of the third filter, and the second compressed zero signal is filtered with the fourth filter to obtain a second echo processing signal, wherein the first filter is matched with the first received synchronization signal, the second filter is obtained by taking a reciprocal of the first filter, the third filter is matched with the second received synchronization signal, and the fourth filter is obtained by taking a reciprocal of the third filter.

$$\varphi_c = \frac{1}{2}\left(\varphi_1 - \varphi_2\right)$$

A compensation phase                is calculated, interpolation is performed on the compensation phase to obtain an interpolated compensation phase $\varphi_c^{'}$, and phase compensation is performed on the second echo processing signal based on the interpolated compensation phase $\varphi_c^{'}$, a number of interpolation points being determined based on a number of azimuth points of the second echo processing signal.

BRIEF DESCRIPTION OF THE DRAWINGS

FIG. 1 is a flowchart of a method for processing a phase synchronization signal of a bistatic SAR based on a coded signal according to an embodiment of the disclosure.

FIG. 2 is a schematic diagram of a time sequence of receiving and transmitting signals by a primary satellite and a secondary satellite according to an embodiment of the disclosure.

FIG. 3 is a schematic diagram of a real part of a first receiving signal according to an embodiment of the disclosure.

FIG. 4 is a schematic diagram of amplitude of a first compressed signal according to an embodiment of the disclosure.

FIG. 5 is a schematic diagram of amplitude of a first compressed zero signal according to an embodiment of the disclosure.

FIG. 6 is a schematic diagram of a real part of a first echo processing signal according to an embodiment of the disclosure.

FIG. 7 is a schematic diagram of a range profile of an imaging result of a first echo processing signal according to an embodiment of the disclosure.

FIG. 8 is a schematic diagram of a range profile of an imaging result of a compensated second echo processing signal according to an embodiment of the disclosure.

FIG. 9 is a schematic diagram of a range profile of an imaging result of a first receiving signal according to an embodiment of the disclosure.

FIG. 10 is a schematic diagram of a range profile of an imaging result of a second receiving signal according to an embodiment of the disclosure.

DETAILED DESCRIPTION

In order to make the purpose, technical solutions and advantages of embodiments of the disclosure clearer, the specific technical solutions of the disclosure will be further described below in combination with the drawings in the embodiments of the disclosure in detail. The following embodiments are adopted not to limit the scope of the disclosure but to describe the disclosure.

Embodiment 1

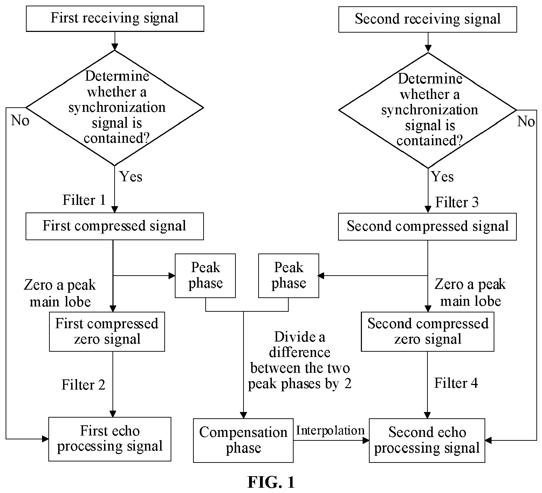

As illustrated in FIG. 1, the embodiment of the disclosure provides a method for processing a phase synchronization signal of a bistatic SAR based on an encoded signal. The method includes the following operations.

Operation 1:

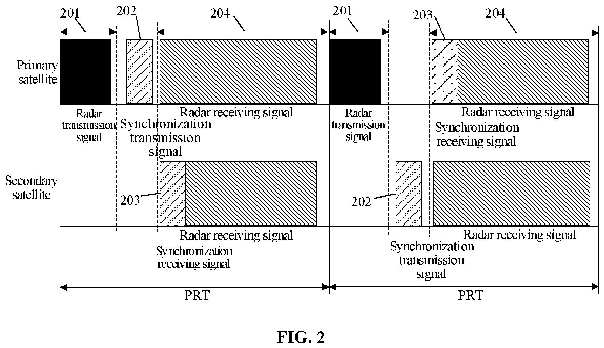

It is assumed that both a sampling rate of a first SAR (primary satellite) and a sampling rate of a second SAR (secondary satellite) are 60MHz and that both a carrier frequency of the first SAR and a carrier frequency of the second SAR are 1.2GHz. A radar signal transmitted by the first SAR is a negative frequency-modulated linear frequency modulation signal having a pulse width of $T_1$ = 40us and a bandwidth of $B_1$=50MHz. It is assumed that there is one point target in a scenario, and a backscattering coefficient of the point target is set to 1. An echo signal of the point target is received by the first SAR and the second SAR to obtain a first received echo signal and a second received echo signal respectively. The first SAR transmits a second phase synchronization signal. The second phase synchronization signal is a positive frequency-modulated linear frequency modulation signal having a pulse width of $T_2$ = 10us and a bandwidth of $B_2$ = 50MHz. The second SAR receives the second phase synchronization signal to obtain a second received synchronization signal. The second SAR transmits a first phase synchronization signal. The first phase synchronization signal is a positive frequency-modulated linear frequency modulation signal having a pulse width of $T_2$ = 10us and a bandwidth of $B_2$=50MHz. The first SAR receives the first phase synchronization signal transmitted by the second SAR to obtain a first received synchronization signal. A diagram of a time sequence of receiving and transmitting signals in an SAR system is illustrated in FIG. 2.

The first SAR stores the first received echo signal and the first received synchronization signal as a first receiving signal $S_{10}$. The second SAR stores the second received echo signal and the second received synchronization signal as a second receiving signal $S_{20}$.

Operation 2:

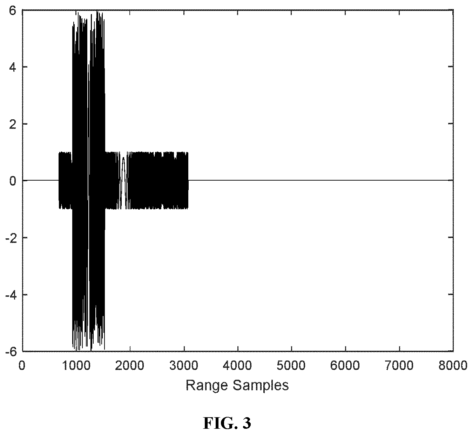

According to a timing relationship, it is determined whether the first received synchronization signal is contained in the signal $S_{10}$. If the first received synchronization signal is not contained in $S_{10}$, $S_{10}$ is directly determined as a first echo processing signal $S_{13}$. If the first received synchronization signal is contained in $S_{10}$, $S_{10}$ can be expressed as $S_{10} = S_{echo1} + S_{syn1}$, where $S_{echo1}$ is a echo signal, $S_{syn1} = w(t - t_{syn1})\exp(j\pi K_{syn}(t-t_{syn1})^2)$ is a synchronization signal. Herein, $K_{syn} = B_2/T_2$ represents a frequency modulation of the synchronization signal; $w(t-t_{syn1})$ represents an envelope of the first received synchronization signal; $t$ denotes ime, and $t_{syn1}$ denotes a time delay of the first received synchronization signal. The real part of the first receiving signal $S_{10}$ is shown in FIG. 3. The first receiving signal $S_{10}$ is processed as follows.

A filter $H_1 = \exp(j\pi f^2/K_{syn})$ (where f is an echo signal frequency) is constructed by using the first received synchronization signal. Matched filtering is performed on the signal $S_{10}$ to obtain a first compressed signal $S_{11}$:

$$S_{11} = \text{ifft}(\text{fft}(S_{10}) \cdot H_1),$$

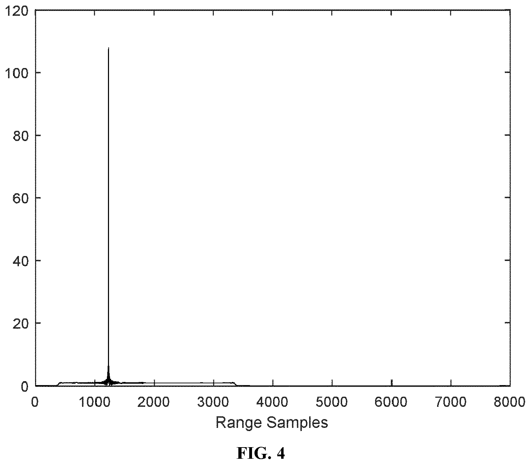

where, '·' represents a multiplication operation, fft represents Fourier transform, and ifft represents inverse Fourier transform. The amplitude of the first compressed signal $S_{11}$ is shown in FIG. 4.

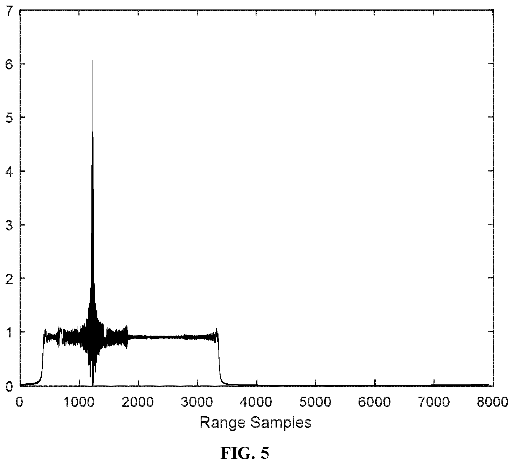

A peak phase $\varphi_1$ is extracted from the first compressed signal $S_{11}$, and a pulse peak main lobe of $S_{11}$ is zeroed to obtain a first compressed zero signal $S_{12}$. An amplitude of the first compressed zero signal $S_{12}$ is shown in FIG. 5.

A filter $H_2 =1/H_1=\exp(-j\pi f^2/K_{syn})$ is obtained by taking a reciprocal of the filter $H_1$. The signal $S_{12}$ is filtered with the filter $H_2$ to obtain a first echo processing signal $S_{13}$:

$$S_{13} = \text{ifft}(\text{fft}(S_{12}) \cdot H_2).$$

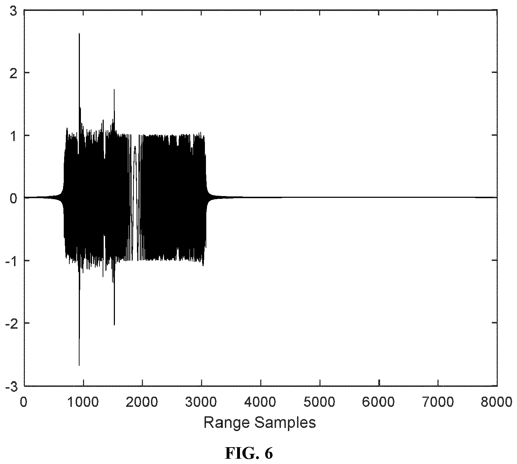

A real part of the first echo processing signal $S_{13}$ is shown in FIG. 6.

According to the timing relationship, it is determined whether the second received synchronization signal is contained in the signal $S_{20}$. If the second received synchronization signal is not contained in $S_{20}$, $S_{20}$ is directly taken as a second echo processing signal $S_{23}$. If the second received synchronization signal is contained in $S_{20}$, $S_{20}$ can be expressed as $S_{20} = S_{echo2} + S_{syn2}$, where $S_{echo2}$ is an echo signal, $S_{syn2} = w(t-t_{syn2})\exp(j\pi K_{syn}(t-t_{syn2})^2)$ is a synchronization signal, $K_{syn}$ is a frequency modulation of the synchronization signal, $w(t-t_{syn2})$ is an envelope of the second received synchronization signal, $t_{syn2}$ denotes a time delay of the second received synchronization signal. $S_{20}$ is processed as follows.

A filter $H_3 = \exp(j\pi f^2/K_{syn})$ is constructed by using the second received synchronization signal. Matched filtering is performed on the signal $S_{20}$ with the filter $H_3$ to obtain a second compressed signal $S_{21}$:

$$S_{21} = \text{ifft}(\text{fft}(S_{20}) \cdot H_3)$$

The second compressed signal $S_{21}$ is shown above. A peak phase $\varphi_2$ is extracted from the second compressed signal $S_{21}$, and a pulse peak main lobe of the second compressed signal $S_{21}$ is zeroed to obtain a second compressed zero signal $S_{22}$.

A filter $H_4 =1/H_3=\exp(-j\pi f^2/K_3)$ is obtained by taking a reciprocal of the filter $H_3$. The signal $S_{22}$ is filtered with the filter $H_4$ to obtain a second echo processing signal $S_{23}$:

$$S_{23} = \text{ifft}(\text{fft}(S_{22}) \cdot H_4).$$

Operation 3:

$$\varphi_c = \frac{1}{2}\left(\varphi_1 - \varphi_2\right)$$

A compensation phase is calculated. The compensation phase is interpolated to obtain a compensation phase $\varphi_c'$. Phase compensation is performed on the second echo processing signal $S_{23}$ according to the interpolated compensation phase $\varphi_c'$ to obtain a compensated second echo processing signal

$$S_{23}' = S_{23} \cdot \exp(j\varphi_3')$$

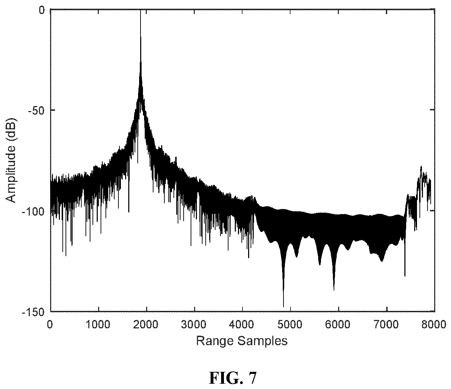

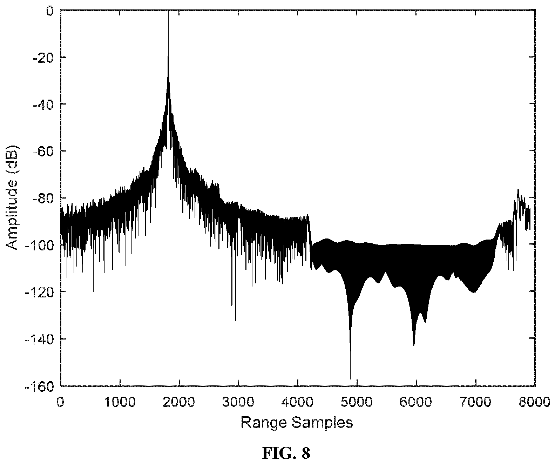

After the above operations, the first echo processing signal $S_{13}$ and the compensated second echo processing signal $S_{23}'$ are imaged by using a backprojection algorithm, and range profiles of the imaging results are shown in FIG.7 and FIG.8, respectively. The imaging results of point target in both figure and figure are good, and the effectiveness of the algorithm is verified.

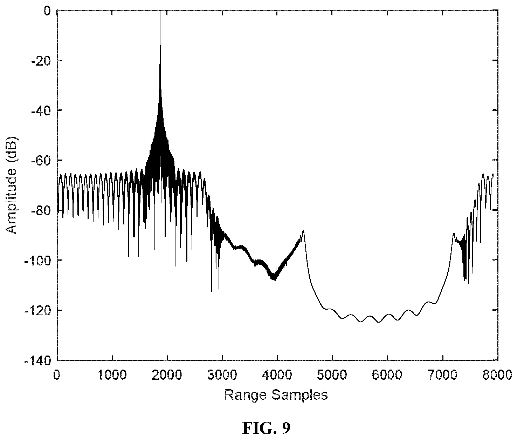

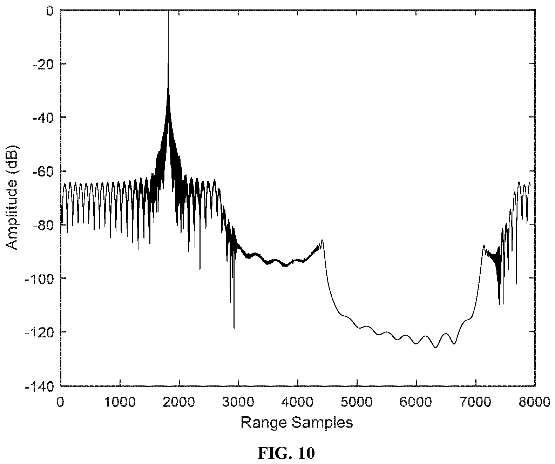

As a contrast, the first receiving signal $S_{10}$ and the second receiving signal $S_{20}$ are directly imaged by using the backprojection algorithm, respectively, and range profiles of the imaging results are shown in FIG.9 and FIG. 10, respectively. Since a first SAR image is imaged by directly using $S_{10}$ and a synchronization signal is not separated, a signal-to-noise ratio in figure is reduced compared to another figure. Since a second SAR image is imaged by directly using $S_{20}$, neither the synchronization signal is compensated nor the synchronization signal is separated, the image is out of focus, and the signal-to-noise ratio is reduced.

**Claims**

1. A method for processing a non-interrupted phase synchronization signal of a bistatic synthetic aperture radar, SAR, based on a coded signal, comprising:

   receiving, by a first SAR and a second SAR, an echo signal generated by a radar signal transmitted by the first SAR to obtain a first received echo signal and a second received echo signal respectively; receiving, by the second SAR, a second phase synchronization signal from the first SAR to obtain a second received synchronization signal; and receiving, by the first SAR, a first phase synchronization signal from the second SAR to obtain a first received synchronization signal;
   if the first SAR receives the echo signal and the first phase synchronization signal transmitted by the second SAR within a present receiving period, storing, by the first SAR, both the first received echo signal and the first received synchronization signal as a first receiving signal, and if the first SAR receives the echo signal but does not receive the first phase synchronization signal from the second SAR within the present receiving period, storing, by the first SAR, only the first received echo signal as the first receiving signal;
if the second SAR receives the echo signal and the second phase synchronization signal transmitted by the first SAR within the present receiving period, storing, by the second SAR, both the second received echo signal and the second received synchronization signal as a second receiving signal, and if the second SAR receives the echo signal but does not receive the second phase synchronization signal from the first SAR within the present receiving period, storing, by the second SAR, only the second received echo signal as the second receiving signal;
determining whether the first receiving signal contains the first received synchronization signal within the present receiving period; determining, in response to determining that the first receiving signal does not contain the first received synchronization signal within the present receiving period, the first receiving signal as a first echo processing signal; and in response to determining that the first receiving signal contains the first received synchronization signal within the present receiving period, processing the first receiving signal as follows: constructing a first filter, performing matched filtering on the first receiving signal with the first filter to obtain a first compressed signal, extracting a peak phase $\varphi_1$ from the first compressed signal, zeroing a pulse peak main lobe of the first compressed signal to obtain a first compressed zero signal, constructing a second filter, and filtering the first compressed zero signal with the second filter to obtain the first echo processing signal;
determining whether the second receiving signal contains the second received synchronization signal within the present receiving period; determining, in response to determining that the second receiving signal does not contain the second received synchronization signal within the present receiving period, the second receiving signal as a second echo processing signal; and in response to determining that the second receiving signal contains the second received synchronization signal within the present receiving period, processing the second receiving signal as follows: constructing a third filter, performing matched filtering on the second receiving signal with the third filter to obtain a second compressed signal, extracting a peak phase $\varphi_2$ from the second compressed signal, zeroing a pulse peak main lobe of the second compressed signal to obtain a second compressed zero signal, constructing a fourth filter, and filtering the second compressed zero signal with the fourth filter to obtain the second echo processing signal; and

calculating a compensation phase

$$\varphi_c = \frac{1}{2}\left(\varphi_1 - \varphi_2\right)$$

, interpolating the compensation phase to obtain an interpolated compensation phase $\varphi_c{}'$ , and performing phase compensation on the second echo processing signal based on the interpolated compensation phase $\varphi_c{}'$ ,

wherein the first filter is matched with the first received synchronization signal, the second filter is obtained by taking a reciprocal of the first filter, the third filter is matched with the second received synchronization signal, and the fourth filter is obtained by taking a reciprocal of the third filter.

2. The method of claim 1, wherein the first phase synchronization signal and the second phase synchronization signal are coded signals orthogonal to the radar signal.

3. The method of claim 1, wherein during the interpolation of the compensation phase, a number of interpolation points is determined based on a number of azimuth points of the second echo processing signal.

**Patentansprüche**

1. Verfahren zur Verarbeitung eines nicht-unterbrochenen Phasensynchronisationssignals eines bistatischen Radars mit synthetischer Apertur, SAR (Sythetic Aperture Radar), basierend auf einem kodierten Signal, aufweisend:

Empfangen, durch ein erstes SAR und ein zweites SAR, eines Echosignals, das von einem Radarsignal erzeugt wird, das von dem ersten SAR gesendet wird, um jeweils ein erstes empfangenes Echosignal und ein zweites empfangenes Echosignal zu erhalten; Empfangen eines zweiten Phasensynchronisationssignals vom ersten SAR durch das zweite SAR, um ein zweites empfangenes Synchronisationssignal zu erhalten; und Empfangen eines ersten Phasensynchronisationssignals von dem zweiten SAR durch das erste SAR, um ein erstes empfangenes Synchronisationssignal zu erhalten;

Speichern sowohl des ersten empfangenen Echosignals als auch des ersten empfangenen Synchronisationssignals als ein erstes Empfangssignal durch das erste SAR, wenn das erste SAR das Echosignal und das vom zweiten SAR gesendete erste Phasensynchronisationssignal innerhalb einer aktuellen Empfangsperiode empfängt, und Speichern nur des ersten empfangenen Echosignals als das erste Empfangssignal durch das erste SAR, wenn das erste SAR das Echosignal, jedoch nicht das erste Phasensynchronisationssignal von dem zweiten SAR innerhalb der vorliegenden Empfangsperiode empfängt;

Speichern sowohl des zweiten empfangene Echosignal als auch des zweiten empfangenen Synchronisationssignals durch das zweite SAR als ein zweites Empfangssignal, wenn das zweite SAR das Echosignal und das zweite vom ersten SAR gesendete Phasensynchronisationssignal innerhalb der vorliegenden Empfangsperiode empfängt, und Speichern nur des zweiten empfangenen Echosignals als das zweite Empfangssignal durch das zweite SAR, wenn das zweite SAR das zweite empfangene Echosignal, aber nicht das zweite Phasensynchronisationssignal vom ersten SAR innerhalb der vorliegenden Empfangsperiode empfängt;

Bestimmen, ob das erste Empfangssignal das erste empfangene Synchronisationssignal innerhalb der vorliegenden Empfangsperiode enthält; als Reaktion auf die Feststellung, dass das erste Empfangssignal nicht das erste empfangene Synchronisationssignal innerhalb der vorliegenden Empfangsperiode enthält, Bestimmen des ersten Empfangssignals als ein erstes Echoverarbeitungssignal; und als Reaktion auf die Feststellung, dass das erste Empfangssignal das erste empfangene Synchronisationssignal innerhalb der vorliegenden Empfangsperiode enthält, Verarbeiten des ersten Empfangssignals wie folgt: Konstruieren eines ersten Filters, Durchführen einer angepassten Filterung an dem ersten Empfangssignal mit dem ersten Filter, um ein erstes komprimiertes Signal zu erhalten, Extrahieren einer Spitzenphase $\varphi_1$ aus dem ersten komprimierten Signal, Nullsetzen einer Pulsspitzen-Hauptkeule des ersten komprimierten Signals, um ein erstes komprimiertes Nullsignal zu erhalten, Erstellen eines zweiten Filters und Filtern des ersten komprimierten Nullsignals mit dem zweiten Filter, um das erste Echoverarbeitungssignal zu erhalten;

Bestimmen, ob das zweite Empfangssignal das zweite empfangene Synchronisationssignal innerhalb der vorliegenden Empfangsperiode enthält; als Reaktion auf die Feststellung, dass das zweite Empfangssignal das zweite empfangene Synchronisationssignal nicht innerhalb der vorliegenden Empfangsperiode enthält, Bestimmen des zweiten Empfangssignals als ein zweites Echoverarbeitungssignal; und als Reaktion auf die Feststellung, dass das zweite Empfangssignal das zweite empfangene Synchronisationssignal innerhalb der vorliegenden Empfangsperiode enthält, Verarbeiten des zweiten Empfangssignals wie folgt: Konstruieren eines dritten Filters, Durchführen einer angepassten Filterung an dem zweiten Empfangssignal mit dem dritten Filter, um ein zweites komprimiertes Signal zu erhalten, Extrahieren einer Spitzenphase $\varphi_2$ aus dem zweiten komprimierten Signal, Nullsetzen einer Impulsspitzen-Hauptkeule des zweiten komprimierten Signals, um ein zweites komprimiertes Nullsignal zu erhalten, Konstruieren eines vierten Filters und Filtern des zweiten komprimierten Nullsignals mit dem vierten Filter, um das zweite Echoverarbeitungssignal zu erhalten; und

Berechnen einer Kompensationsphase

$$\varphi_c = \frac{1}{2}\left(\varphi_1 - \varphi_2\right)$$

, Interpolieren der Kompensationsphase, um eine interpolierte Kompensationsphase $\varphi_c'$ zu erhalten, und Durchführen einer Phasenkompensation an dem zweiten Echoverarbeitungssignal basierend auf der interpolierten Kompensationsphase $\varphi_c'$,

wobei der erste Filter an das erste empfangene Synchronisationssignal angepasst ist, der zweite Filter durch Bilden eines Kehrwertes des ersten Filters erhalten wird, der dritte Filter an das zweite empfangene Synchronisationssignal angepasst ist und der vierte Filter durch Bilden eines Kehrwertes des dritten Filters erhalten wird.

2. Verfahren nach Anspruch 1, wobei das erste Phasensynchronisationssignal und das zweite Phasensynchronisationssignal kodierte Signale sind, die orthogonal zu dem Radarsignal sind.

3. Verfahren nach Anspruch 1, wobei während der Interpolation der Kompensationsphase eine Anzahl von Interpolationspunkten basierend auf einer Anzahl von Azimutpunkten des zweiten Echoverarbeitungssignals bestimmt wird.

## Revendications

1. Procédé de traitement d'un signal de synchronisation de phase non interrompu d'un radar à ouverture synthétique, SAR, bistatique sur la base d'un signal codé, comprenant :

la réception, par un premier SAR et un deuxième SAR, d'un signal d'écho généré par un signal de radar transmis par le premier SAR pour obtenir respectivement un premier signal d'écho reçu et un deuxième signal d'écho reçu ; la réception, par le deuxième SAR, d'un deuxième signal de synchronisation de phase depuis le premier SAR pour obtenir un deuxième signal de synchronisation reçu ; et la réception, par le premier SAR, d'un premier signal de synchronisation de phase depuis le deuxième SAR pour obtenir un premier signal de synchronisation reçu ;

si le premier SAR reçoit le signal d'écho et le premier signal de synchronisation de phase transmis par le deuxième SAR au cours d'une période de réception présente, le stockage, par le premier SAR, à la fois du premier signal d'écho reçu et du premier signal de synchronisation reçu en tant qu'un premier signal de réception, et, si le premier SAR reçoit le signal d'écho mais ne reçoit pas le premier signal de synchronisation de phase depuis le deuxième SAR au cours de la période de réception présente, le stockage, par le premier SAR, uniquement du premier signal d'écho reçu en tant que le premier signal de réception ;

si le deuxième SAR reçoit le signal d'écho et le deuxième signal de synchronisation de phase transmis par le premier SAR au cours de la période de réception présente, le stockage, par le deuxième SAR, à la fois du deuxième signal d'écho reçu et du deuxième signal de synchronisation reçu en tant qu'un deuxième signal de réception, et, si le deuxième SAR reçoit le signal d'écho mais ne reçoit pas le deuxième signal de synchronisation de phase depuis le premier SAR au cours de la période de réception présente, le stockage, par le deuxième SAR, uniquement du deuxième signal d'écho reçu en tant que le deuxième signal de réception ;

la détermination si le premier signal de réception contient le premier signal de synchronisation reçu au cours de la période de réception présente ;

la détermination, en réponse à la détermination que le premier signal de réception ne contient pas le premier signal de synchronisation reçu au cours de la période de réception présente, du premier signal de réception en tant qu'un premier signal de traitement d'écho ; et, en réponse à la détermination que le premier signal de réception contient le premier signal de synchronisation reçu au cours de la période de réception présente, le traitement du premier signal de réception comme suit : la construction d'un premier filtre, la réalisation d'un filtrage adapté sur le premier signal de réception avec le premier filtre pour obtenir un premier signal compressé, l'extraction d'une phase de crête $\varphi_1$ depuis le premier signal compressé, la mise à zéro d'un lobe principal de crête d'impulsion du premier signal compressé pour obtenir un premier signal zéro compressé, la construction d'un deuxième filtre, et le filtrage du premier signal zéro compressé avec le deuxième filtre pour obtenir le premier signal de traitement d'écho ;

la détermination si le deuxième signal de réception contient le deuxième signal de synchronisation reçu au cours de la période de réception présente ; la détermination, en réponse à la détermination que le deuxième signal de réception ne contient pas le deuxième signal de synchronisation reçu au cours de la période de réception présente, du deuxième signal de réception en tant qu'un deuxième signal de traitement d'écho ; et, en réponse à la détermination que le deuxième signal de réception contient le deuxième signal de synchronisation reçu au cours de la période de réception présente, le traitement du deuxième signal de réception comme suit : la construction d'un troisième filtre, la réalisation d'un filtrage adapté sur le deuxième signal de réception avec le troisième filtre pour obtenir un deuxième signal compressé, l'extraction d'une phase de crête $\varphi_2$ depuis le deuxième signal compressé, la mise à zéro d'un lobe principal de crête d'impulsion du deuxième signal compressé pour obtenir un deuxième signal zéro compressé, la construction d'un quatrième filtre, et le filtrage du deuxième signal zéro compressé avec le quatrième filtre pour obtenir le deuxième signal de traitement d'écho ; et le calcul d'une phase de compensation

$$\varphi_c = \frac{1}{2}(\varphi_1 - \varphi_2)$$, l'interpolation de la phase de compensation pour obtenir une phase de compensation interpolée $\varphi_c'$, et la réalisation d'une compensation de phase sur le deuxième signal de traitement d'écho sur la base de la phase de compensation interpolée $\varphi_c'$,
dans lequel le premier filtre est adapté au premier signal de synchronisation reçu, le deuxième filtre est obtenu en prenant une réciproque du premier filtre, le troisième filtre est adapté au deuxième signal de synchronisation reçu, et le quatrième filtre est obtenu en prenant une réciproque du troisième filtre.

2. Procédé selon la revendication 1, dans lequel le premier signal de synchronisation de phase et le deuxième signal de synchronisation de phase sont des signaux codés orthogonaux au signal de radar.

3. Procédé selon la revendication 1, dans lequel, au cours de l'interpolation de la phase de compensation, un nombre de points d'interpolation est déterminé sur la base de points d'azimut du deuxième signal de traitement d'écho.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 109917388 A